# EUROPEAN PATENT APPLICATION

(11) **EP 4 797 505 A1**
(43) Date of publication of application: **26.08.2026**
(21) Application number: 25220313.8
(22) Date of filing: 03.12.2025
(51) Int. Cl.: H02K 3/28, H02K 3/47, H02K 21/24

(54) **AXIAL FLUX MOTOR STATOR STRUCTURE**

(30) Priority: 20.02.2025 US 202563760640 P; 15.08.2025 CN 202511142914
(71) Applicant: Delta Electronics, Inc., Taoyuan City 333 (TW)
(72) Inventor: CHEN, Yi-No, 333 Taoyuan City (TW); HSU, Tzu-Ting, 333 Taoyuan City (TW)
(74) Representative: Porta & Consulenti Associati S.p.A.

(57) **Abstract**

An axial flux motor stator structure includes magnetic poles and magnetic field action areas, each magnetic field action area including level-positions arranged axially along a rotation axis, and conductors forming a multi-phase winding. Each conductor, after passing through a lowest level-position of the level-positions, ascends to a higher level-position of the level-positions each time each conductor is routed to a next one of the magnetic field action areas corresponding to a next one of the magnetic poles, until each conductor ascends through a highest level-position of the level-positions. Or each conductor, after passing through a highest level-position of the level-positions, descends to a lower level-position of the level-positions each time each conductor is routed to a next one of the magnetic field action areas corresponding to a next one of the magnetic poles, until each conductor descends through a lowest level-position of the level-positions.

## Description

### BACKGROUND

### Field of Disclosure

The present disclosure relates to a motor, and more particularly to an axial flux motor stator structure.

### Description of Related Art

Motors are components configured to convert electrical energy into mechanical energy and have been widely used in daily life. The current axial flux motor uses distributed winding, and the conductors are routed along the circumferential slots in the stator slots according to the corresponding magnetic pole positions. In order to ensure that the conductor arrangements can effectively fill the space in the slot and improve the slot fill factor, the two conductors in adjacent slots must be swapped up and down in the axial direction for the protrusions before routing to the next magnetic pole. This prevents the individual conductors from being bent and formed into a complete winding, requiring complex forming methods and equipment to produce the entire winding.

### SUMMARY

The present disclosure provides an axial flux motor stator structure to deal with the needs of the prior art problems.

In one or more embodiments, an axial flux motor stator structure includes a plurality of magnetic poles and a plurality of magnetic field action areas, each magnetic field action area comprising a plurality of level-positions arranged axially along a rotation axis; and a plurality of conductors forming a multi-phase winding, wherein each conductor, after passing through a lowest level-position of the level-positions, ascends to a higher level-position of the level-positions each time when each conductor is routed to a next one of the magnetic field action areas corresponding to a next one of the magnetic poles, until each conductor ascends through a highest level-position of the level-positions, such that all the conductors are routed in the same geometric configuration within the magnetic field action areas of the magnetic poles; or wherein each conductor, after passing through a highest level-position of the level-positions, descends to a lower level-position of the level-positions each time when each conductor is routed to a next one of the magnetic field action areas corresponding to a next one of the magnetic poles, until each conductor descends through a lowest level-position of the level-positions, such that all the conductors are routed in the same geometric configuration within the magnetic field action areas of the magnetic poles; and wherein each phase winding of the multi-phase winding comprises at least one secondary winding, each secondary winding comprises a portion of the conductors connected in series.

In one or more embodiments, two secondary windings routed in the same geometric direction are connected in series via an axial connection segment; or two secondary windings routed in opposite geometric directions are connected in series via a same-layer connection segment.

In one or more embodiments, the two secondary windings routed in the same geometric direction are configured to transmit current along the same circumferential direction, or the two secondary windings routed in opposite geometric directions are configured to transmit current along opposite circumferential directions.

In one or more embodiments, the axial connection segment connected between the two secondary windings routed in the same geometric direction are located between the lowest level-position of the level-positions and the highest level-position of the level-positions.

In one or more embodiments, the same-layer connection segment connected between the two secondary windings routed in opposite geometric directions are located at the lowest level-position of the level-positions or at the highest level-position of the level-positions.

In one or more embodiments, each phase winding of the multi-phase winding has a corresponding one of the magnetic field action areas corresponding to each of the magnetic poles, and each magnetic field action area has at least one secondary winding.

In one or more embodiments, each phase winding of the multi-phase winding has corresponding circumferentially-adjacent two of the magnetic field action areas corresponding to each of the magnetic poles, and each magnetic field action area has at least one secondary winding, and the secondary windings are routed in the same geometric direction or in opposite geometric directions.

In one or more embodiments, each phase winding of the multi-phase winding has at least corresponding circumferentially-adjacent three of the magnetic field action areas corresponding to each of the magnetic poles, and each magnetic field action area has at least one secondary winding, and the secondary windings are routed in the same geometric direction or in opposite geometric directions.

In one or more embodiments, the secondary windings are connected in series to form a single-phase winding, each secondary winding includes N groups of conductors, the N groups of conductors all include the same number of conductors, and the geometric configurations of the N groups of conductors in the magnetic field action areas corresponding to the magnetic poles are balanced relative to the rotation axis, wherein N is a positive integer greater than 1.

In one or more embodiments, the axial flux motor stator structure of claim 1 further including a soft magnetic material body, which comprises a plurality of slots, and each slot is configured as a magnetic field action area.

In one or more embodiments, each conductor includes a plurality of inner diameter protrusions, a plurality of receiving portions, and a plurality of outer diameter protrusions, the receiving portions are located in the corresponding slots, the inner diameter protrusions are located in an internal space of the soft magnetic material body surrounding the rotation axis, and the outer diameter protrusions are exposed outside an outer sidewall of the soft magnetic material body.

In sum, the axial flux motor stator structure disclosed herein has each conductor fabricated into a spirally arranged structure that ascends or descends along the circumferential direction. This conductor structure allows the vertical relative positions of the different conductors to remain unchanged during winding, preventing vertical staggering. This allows each conductor wire to be assembled into a complete winding using a simple manner after forming, and the conductor configuration effectively fills the slot space, increasing the slot fill rate. Furthermore, splitting a single-phase winding into N equal parts and balance the back electromotive force of the split windings, the number of conductors in each winding can be reduced to 1/N. The windings with reduced conductor counts are then reconnected in series to form a single-phase winding that has been split into n groups and is balanced, with the number of conductors or winding turns reduced to 1/N of the original number.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of an axial flux motor stator structure according to an embodiment of the present disclosure;
Fig. 2 illustrates a soft magnetic material body of the axial flux motor stator structure in Fig. 1;
Fig. 3 illustrates a perspective view of a single conductor wire according to an embodiment of the present disclosure;
Fig. 4 illustrates a side view of the single conductor wire in Fig. 3;
Fig. 5 illustrates a top view of the single conductor wire in Fig. 4;
Fig. 6 illustrates a perspective view of a coreless axial flux motor stator structure;
Fig. 7 illustrates a conductor structure of the axial flux motor stator structure in Fig. 6;
Fig. 8 illustrates a geometric configuration of the conductors in the slots (magnetic field action areas) of a single secondary winding according to an embodiment of the present invention;
Fig. 9 illustrates a geometric configuration of the conductors in the slots (magnetic field action area) of two secondary windings connected in series following Fig. 8;
Fig. 10 illustrates another geometric configuration of the conductors in the slots (magnetic field action area) of the two secondary windings connected in series following Fig. 8;
Fig. 11 illustrates a geometric configuration of the conductors in the slots (magnetic field action area) of three secondary windings connected in series following Fig. 9;
Fig. 12 illustrates another geometric configuration of the conductors in the slots (magnetic field action area) of the three secondary windings connected in series following Fig. 9;
Fig. 13 illustrates another geometric configuration of the conductors in the slots (magnetic field action area) of the three secondary windings connected in series following Fig. 9;
Fig. 14 illustrates a geometric configuration of the conductors in the slots (magnetic field action area) of the four secondary windings connected in series following Fig. 11;
Figs. 15A and 15B illustrate the geometric configuration of the conductors in the slots (magnetic field action area) for a single phase split into two groups of split windings;
Fig. 15C illustrates the geometric configuration of the conductors in the slots (magnetic field action area) for combining the two groups of split windings in series as shown in Figs. 15A and 15B;
Figs. 16A, 16B, and 16C illustrate the geometric configuration of the conductors in the slots (magnetic field action area) for a single phase split into three groups of split windings; and
Fig. 16D illustrates the geometric configuration of the conductors in the slots (magnetic field action area) for combining the three groups of split windings in series as shown in Figs. 16A, 16B, and 16C.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

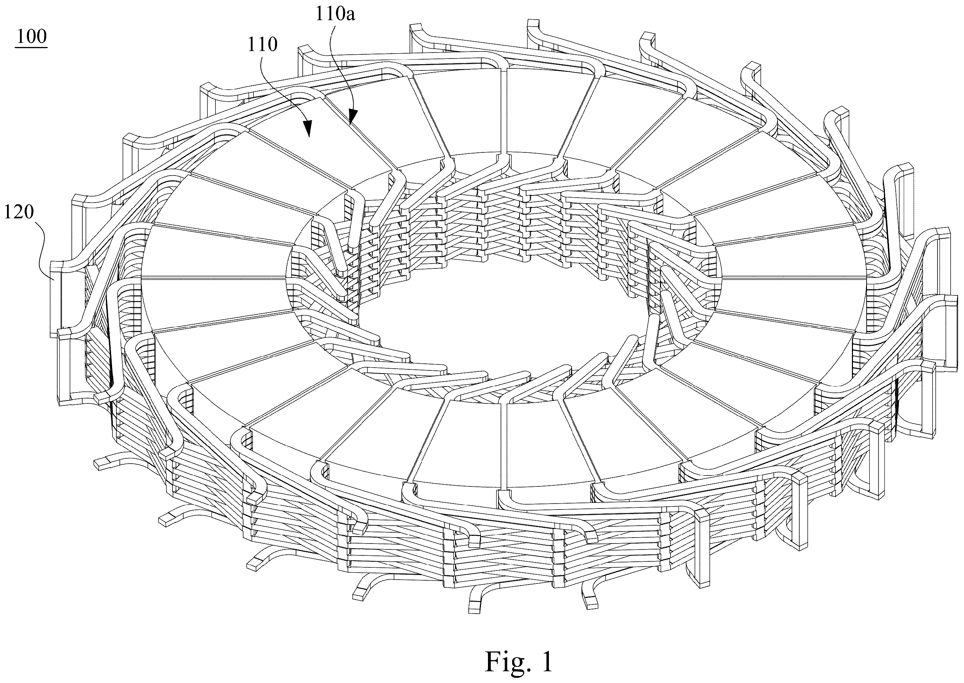

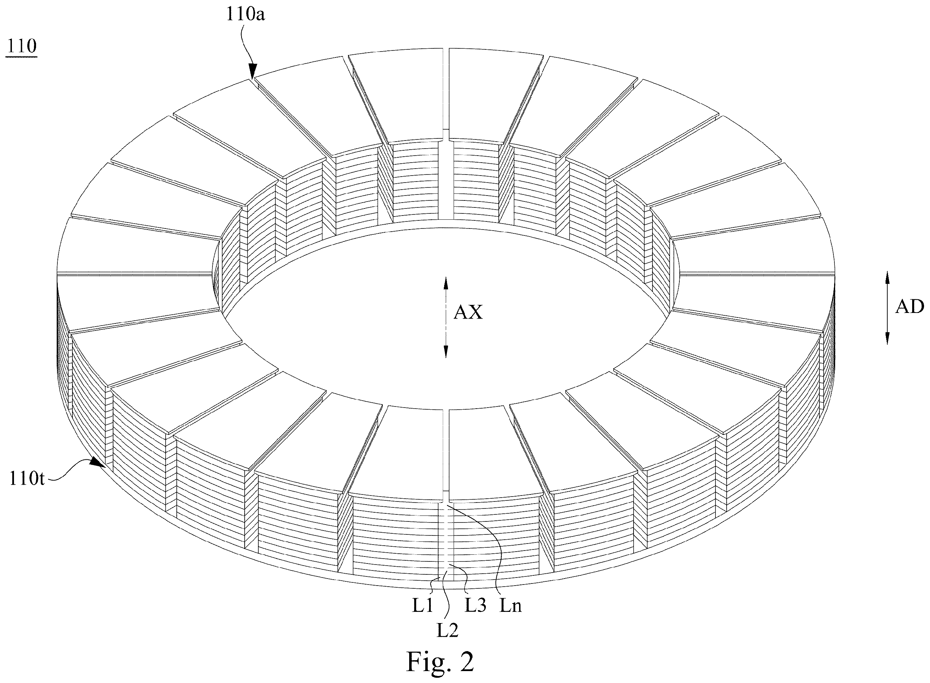

Referring to Figs. 1 and 2, an axial flux motor stator structure 100 includes a soft magnetic material body 110 and a plurality of conductors 120. The soft magnetic material body 110 has a plurality of magnetic poles and a plurality of slots 110a. In some embodiments of the present disclosure, the soft magnetic material body 110 includes 24 slots 110a through which the plurality of conductors 120 are routed through to form a plurality of windings in a distributed winding manner. Taking a three-phase axial flux motor as an example, 24 slots 110a divided by 3 (phases) yield 8 magnetic poles. In other words, one magnetic pole covers three slots. In some embodiments of the present disclosure, the soft magnetic material body 110 is composed of a plurality of silicon steel sheets 110t stacked in an axial direction AD or in a radial direction. In some embodiments of the present disclosure, the soft magnetic material body 110 is composed of a soft magnetic composite (SMC). In some embodiments of the present disclosure, each slot 110a includes a plurality of level-positions (L1, L2, L3-Ln) arranged along the axial direction AD. A single conductor wire occupies only a single level-position when passing through a slot.

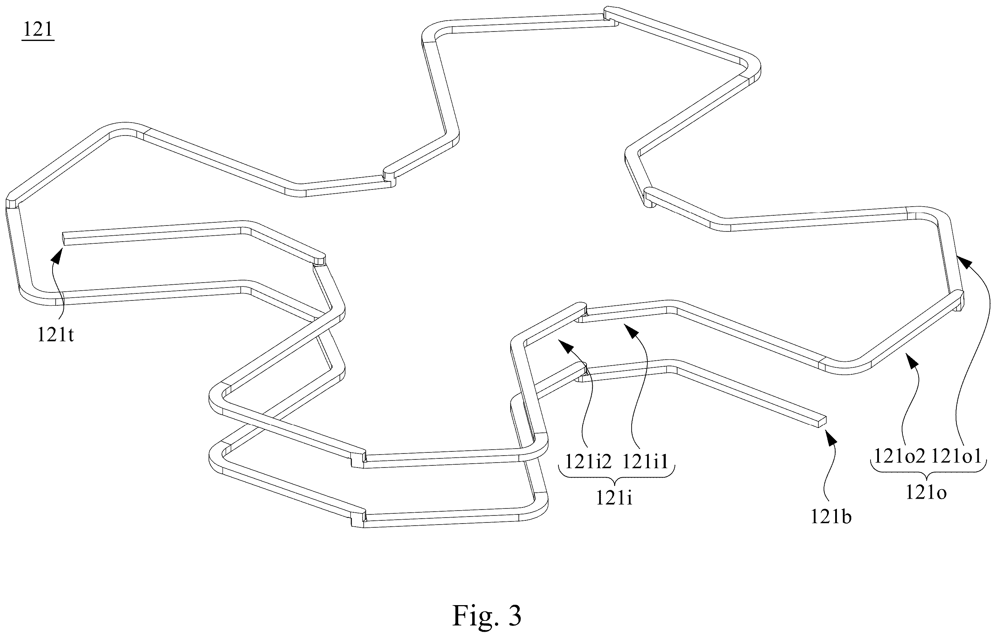

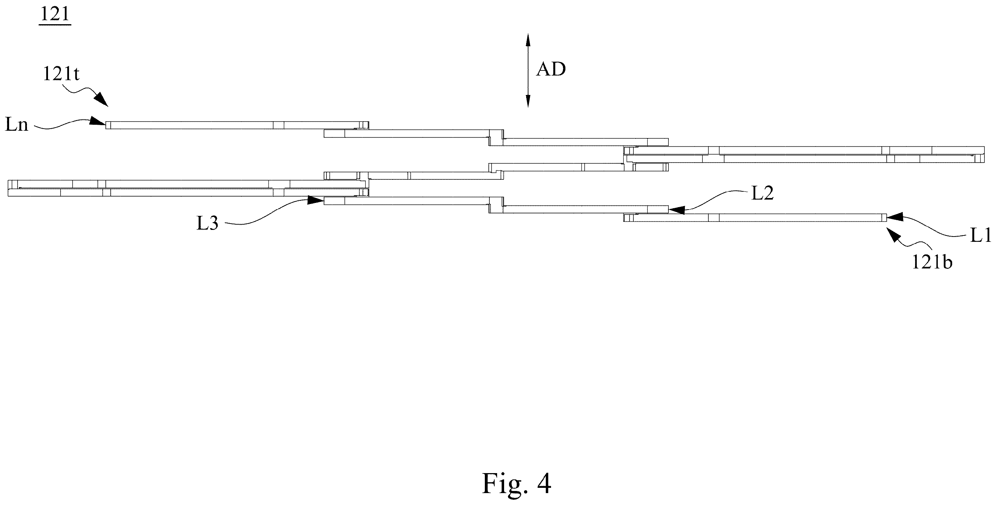

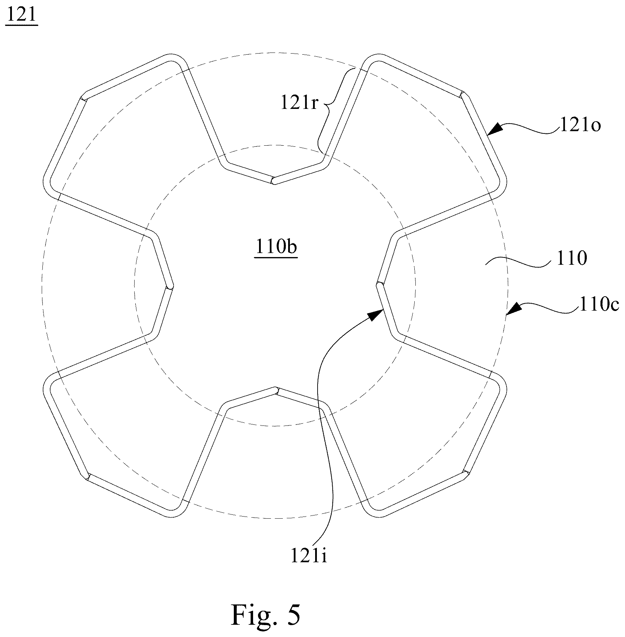

Referring to Figs. 3, 4, and 5, a conductor 121 is used to pass through slots 110a of the soft magnetic material body 110 to form a winding. In some embodiments of the present disclosure, each conductor 121 includes a plurality of inner diameter protrusions 121i, a plurality of receiving portions 121r, and a plurality of outer diameter protrusions 121o. Each receiving portion 121r is located within a corresponding slot of the soft magnetic material body 110 and is connected between the corresponding inner diameter protrusion 121i and outer diameter protrusion 121o. The soft magnetic material body 110 is generally a hollow cylindrical structure. The inner diameter protrusions 121i are located within an internal space 110b of the soft magnetic material body 110, and the outer diameter protrusions 121o are exposed outside the outer sidewall 110c of the soft magnetic material body 110 (see Fig. 5). The internal space 110b is located between the soft magnetic material body 110 and a rotation axis. That is, the soft magnetic material body 110 surrounds the rotation axis to form the internal space 110b. In some embodiments of the present disclosure, each conductor 121 includes a plurality of inner diameter protrusions 121i located within the internal space 110b of the soft magnetic material body 110 surrounding the rotation axis (see Fig. 5), and the two halves (121i1, 121i2) of each inner diameter protrusion 121i have a level-position difference along the axial direction AD (see Fig. 3, the half 121i2 is one level-position higher than the half 121i1). In some embodiments of the present disclosure, each conductor 121 includes a plurality of outer diameter protrusions 121o exposed outside the outer sidewall 110c of the soft magnetic material body 110 (see Fig. 5). The two halves (121o1 and 121o2) of each outer diameter protrusion 121o have a level-position difference along the axial direction AD (see Fig. 3, the half 121o2 is one level-position higher than the half 121o1). In some embodiments of the present disclosure, after each conductor 121 passes through the lowest position of these level-positions (see Fig. 4 , e.g., the bottom end 121b is at the L1 level-position), it ascends and passes through a higher level-position (e.g., L2) among these level-positions each time when it crosses to the next magnetic pole position, until it reaches the highest level-position among these level-positions (see Fig. 4, e.g., the top end 121t is at the Ln level-position). Alternatively, after each conductor 121 passes through the highest of the level-positions (see Fig. 4, e.g., the top end 121t is at the Ln level-position), it descends and passes through a lower level-position among the level-positions each time when it crosses to the next magnetic pole position, until it descends and passes through the lowest position of the level-positions (see FIG. 4, e.g., the bottom end 121b is at the L1 level-position). In some embodiments of the present disclosure, each conductor 121 is formed by bending a continuous linear conductor. In other embodiments of the present disclosure, each conductor 121 comprises a plurality of linear conductors assembled or welded together.

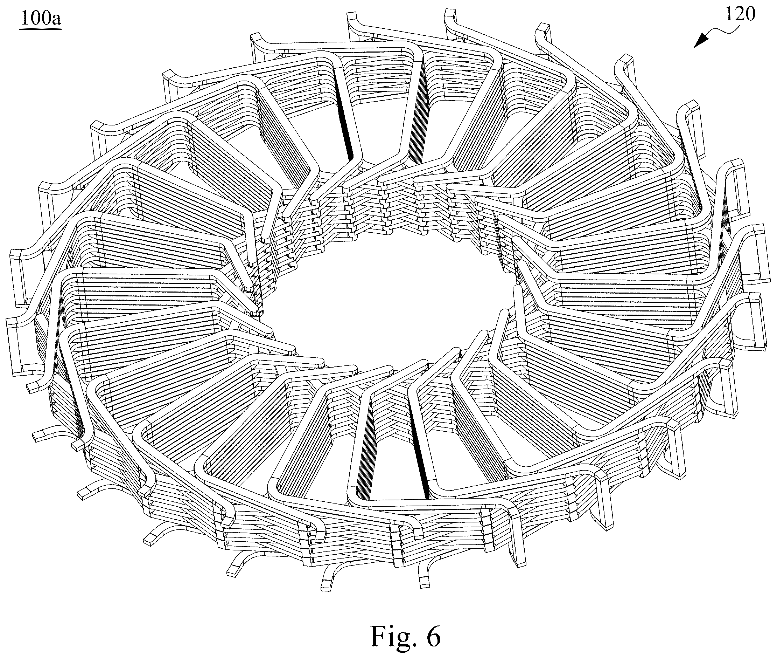

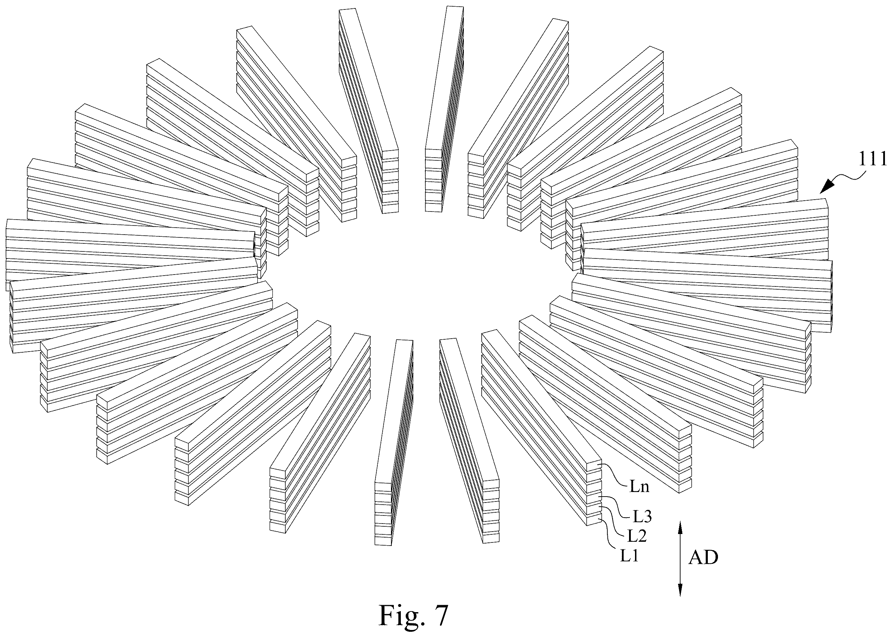

Referring to Fig. 6 and Fig. 7, Fig. 6 illustrates a coreless stator structure 100a for an axial flux motor having a plurality of conductors 120. The coreless stator structure 100a does not include a soft magnetic material body (such as the soft magnetic material body 110 in Fig. 1 and Fig. 2), thereby achieving a simple structure. Despite lacking a soft magnetic material body, the coreless stator structure 100a still has a plurality of magnetic poles and a plurality of level-positions, and the conductors 120 have characteristics similar to those of the conductor 121 shown in FIGs 3-5. Each conductor 120 moves from one magnetic pole position to the next magnetic pole position after passing through one of the lowest level-positions, while simultaneously ascending to a higher level-position until reaching the highest level-position. Alternatively, each conductor 120 moves from one magnetic pole position to the next magnetic pole position after passing through one of the highest level-positions, while simultaneously descending to a lower level-position until reaching the lowest level-position. The arrangement of conductors stacked axially forms a magnetic field action area 111 (see Fig. 7). These magnetic field action areas 111 are arranged adjacent to each other in a symmetrical configuration along the circumferential direction. Each magnetic field action area 111 includes axially stacked level-positions (L1, L2, L3-Ln). A single conductor traverses a slot or magnetic field action area 111, occupying only a single level-position. The conductor stacking area within each slot 110a in Fig. 2 is also referred to as a magnetic field action area.

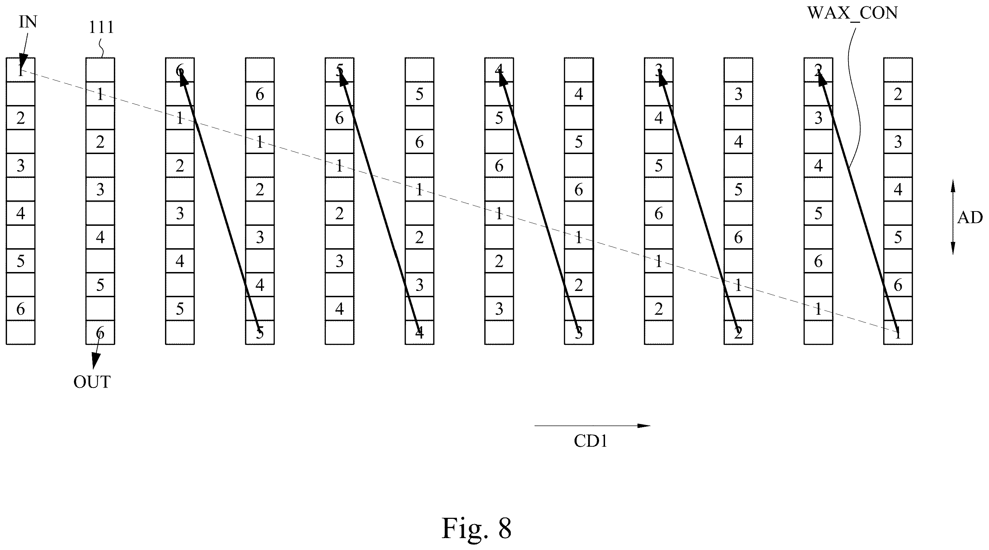

Referring to Fig. 8, which illustrates the geometric configuration of the conductor's receiving portions within a slot (magnetic field action area) of a single secondary winding. The figure represents a view from the outer diameter toward the inner diameter, or a view from the inner diameter toward the outer diameter. In the figure, each magnetic field action area 111 includes 12 level-positions arranged in an axial direction AD. This embodiment includes a secondary winding consisting of six conductors (i.e., conductors 1-6). The secondary winding enters the highest level-position of the magnetic field action area 111 from the level-position labeled IN. The conductor 1 is arranged so that the (electric) current drops one level-position with each magnetic pole it crosses, until it reaches the lowest level-position, forming a spiral geometric configuration (see Figs. 3 and 4 as well). For example, the conductor 1 passes through all level-positions numbered 1 in magnetic field action areas 111, forming a spiral geometric configuration (see the configuration indicated by the dashed line). The current then passes through a winding's axial connection segment WAX_CON, allowing it to enter the highest level of the next conductor, the conductor 2, continuing the same geometric configuration, dropping one level-position with each magnetic pole it crosses, thus forming a spiral geometric configuration for all level-positions numbered 2. In a similar manner, current enters conductors (3, 4, 5, 6) through multiple winding's axial connection segments (similar to the bold arrows labeled WAX_CON), sequentially passing through the level-positions of the magnetic field action areas 111 in the figure, forming a spiral geometric configuration. This current is then connected in series to the conductors 1-6, forming a secondary winding. The current then exits from the lowest level-position of the last conductor 6 (i.e., the lowest level-position labeled OUT). Each of the six conductors (1-6) of the secondary winding is configured to transmit current along the circumferential direction CD1, e.g., counterclockwise.

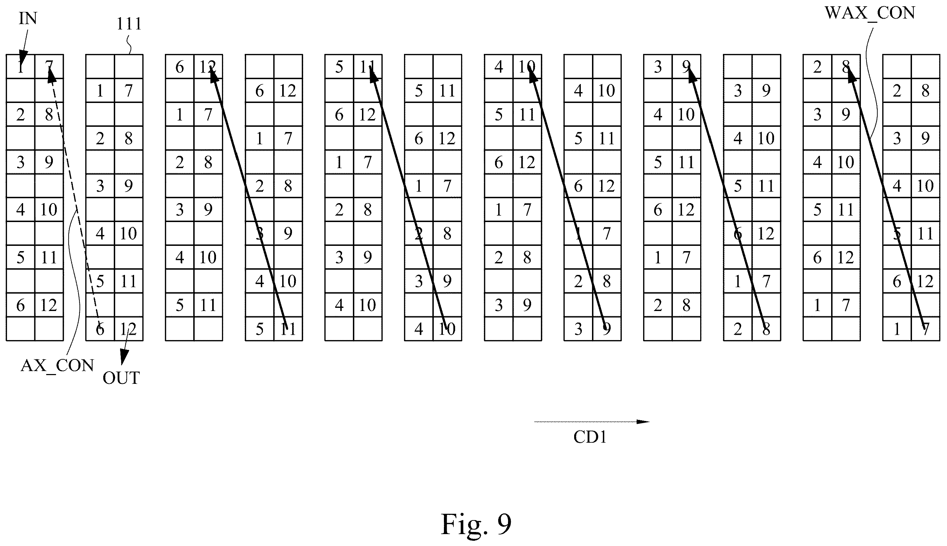

Referring to Fig. 9, which follows Fig. 8, another secondary winding's geometric configuration of conductors (7-12) in the slot (magnetic field action area) is illustrated. To clearly illustrate the winding's axial connection segments WAX_CON of conductors (7-12), the axial connection segments of conductors 1-6 are omitted. If each phase of a multi-phase winding contains two circumferentially-adjacent magnetic field action areas 111 and the conductors (1-6 and 7-12) are arranged in a spiral geometric configuration with the same spiral geometric direction, current can be transferred from one secondary winding (containing conductors 1-6) to another secondary winding (containing conductors 7-12) via an axial connection segments AX_CON by series connection. For example, the conductor 1 of one secondary winding is wound in a descending manner until it reaches the lowest level-position of conductor 6. It is then connected in series with the highest level-position of the conductor 7 of the other secondary winding via the axial connection segment AX_CON. The conductor 7 is then wound in a descending manner to the lowest level-position. This process is repeated, connecting the winding's axial connection segment WAX_CON to the highest level-position of the conductor 8, and so on, until it reaches the lowest level-position of the conductor 12. The conductors (7-12) of the secondary winding have the same geometric configuration as the conductors (1-6) of the secondary winding. This allows the conductors to fill the odd or even level-positions of the two adjacent magnetic field action areas. The twelve conductors (1-12) of the two secondary windings are used to carry current along the circumferential direction CD1. Current flows out of the last conductor 12 at the lowest level-position (i.e., the position labeled OUT).

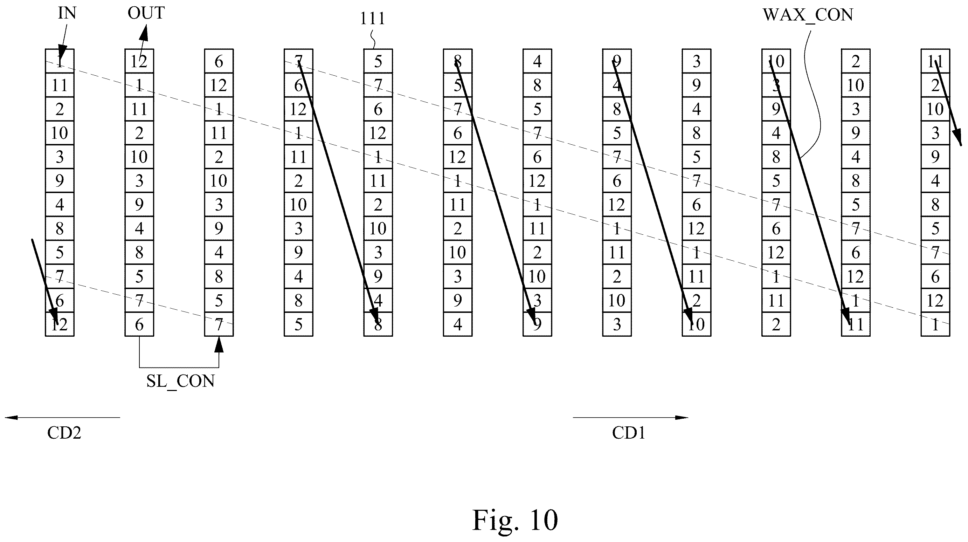

Referring to Fig. 10, which follows Fig. 8, a different geometric configuration of the slots (magnetic field action areas) of the conductors (7-12) is illustrated and different from Fig. 9. In this embodiment, each phase of the multi-phase winding includes single one magnetic field action area 111. A secondary winding is wound in a descending manner. After winding conductors 1 through 6, the current in conductor 6 is directed in series to another secondary winding's conductor 7 of another magnetic pole through a same-layer connection segment SL_CON, whose ends are located at the same level-position (the lowest level-position in this embodiment). The conductors (7-12) of the secondary winding have a different spiral geometric configuration (i.e., in opposite spiral geometric direction) from the conductors (1-6) of the secondary winding. By the series connection of the same-layer connection segment SL_CON, the current direction of the conductors (7-12) is reversed with respect to the conductors (1-6) (CD1 is changed to CD2) to match the magnetic pole position. Unlike the conductors (1-6), the conductors (7-12) wind around each conductor in sequence until the current flows out of the highest level-position of the last conductor 12 (i.e., the highest level-position labeled OUT). The conductors (7-12) are used to transmit current in another circumferential direction CD2, which is opposite to the circumferential direction CD1 of the conductors (1-6). Circumferential direction CD1 is, e.g., counterclockwise, while circumferential direction CD2 is, e.g., clockwise. Furthermore, in this embodiment, the conductors (1-6) of each corresponding secondary winding are located in the same magnetic field action area 111 as the conductors (7-12) of the other secondary winding and are staggered from each other by their level-positions.

In summary, in Fig. 9, two secondary windings arranged in the same direction are connected in series via an axial connection segment AX_CON, and the current directions of the two secondary windings are the same (CD1). In FIG. 10, two secondary windings arranged in opposite directions are connected in series via a same-layer connection segment SL_CON, and the current directions of the two secondary windings are different (CD1 and CD2).

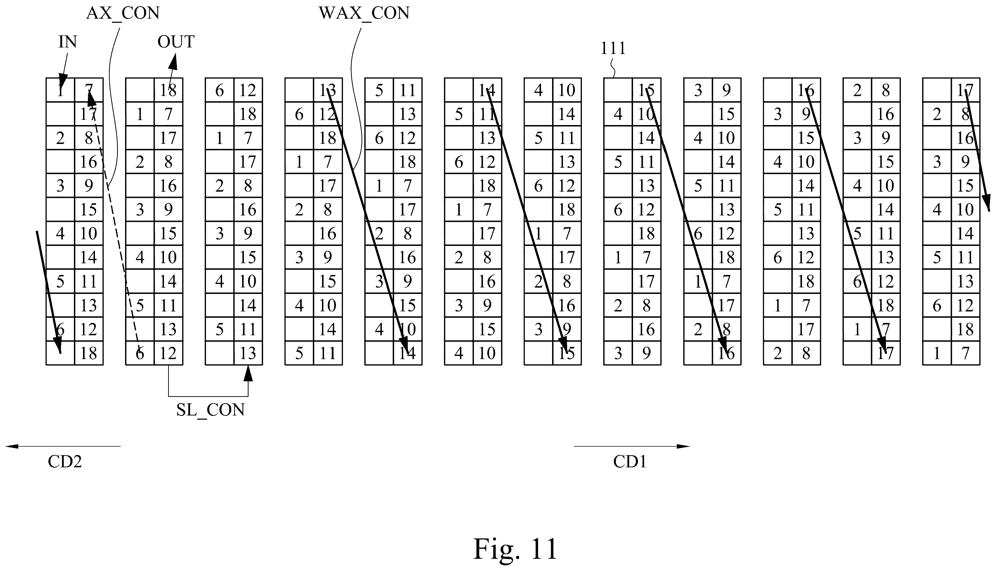

Referring to Fig. 11, which follows Fig. 9 and illustrates the geometric configuration of the conductors (13-18) of a secondary winding in a slot (magnetic field action area). To clearly illustrate the winding's axial connection segments WAX_CON of the conductors (13-18) of the secondary winding, the axial connection segments of the conductors (1-6) and (7-12) of the other secondary windings are omitted. In this embodiment, each phase of the multi-phase winding includes two circumferentially-adjacent magnetic field action areas 111. The current can be conducted from the secondary winding's conductor 12 to another secondary winding's conductor 13 of another magnetic pole via the same-layer connection segment SL_CON with both ends at the same level-position. The secondary winding's conductors (13-18) have a different spiral geometric configuration from the secondary winding's conductors (7-12) and the secondary winding's conductors (1-6). Specifically, the conductors (13-18) of the secondary winding are wound in an ascending manner, while the conductors (7-12) of the secondary winding and the secondary winding's conductors (1-6) are wound in a descending manner. Therefore, the current direction is reversed (CD1 is changed to CD2) to match the magnetic pole position. Therefore, after secondary winding's conductor 12 reaches its lowest level-position, it conducts current through the same-layer connection segment SL_CON to the lowest level-position of the conductor 13 in the other secondary winding. Current propagates along the circumferential direction CD2 in the secondary winding's conductors (13-18), ascending one level-position each time when it crosses a magnetic pole. Each secondary winding's conductor (13-18) carries current along the circumferential direction CD2 and is connected in series via the winding's axial connection segment WAX_CON. Current exits at the highest level of the last conductor 18 (i.e., the highest level-position labeled OUT). Furthermore, the secondary winding's conductors (1-6), the secondary winding's conductors (7-12), and the secondary winding's conductors (13-18) are located in adjacent magnetic field action areas 111. Furthermore, the secondary winding's conductors (7-12) and the secondary winding's conductors (13-18) are located in the same magnetic field action area 111 and are staggered by level-position.

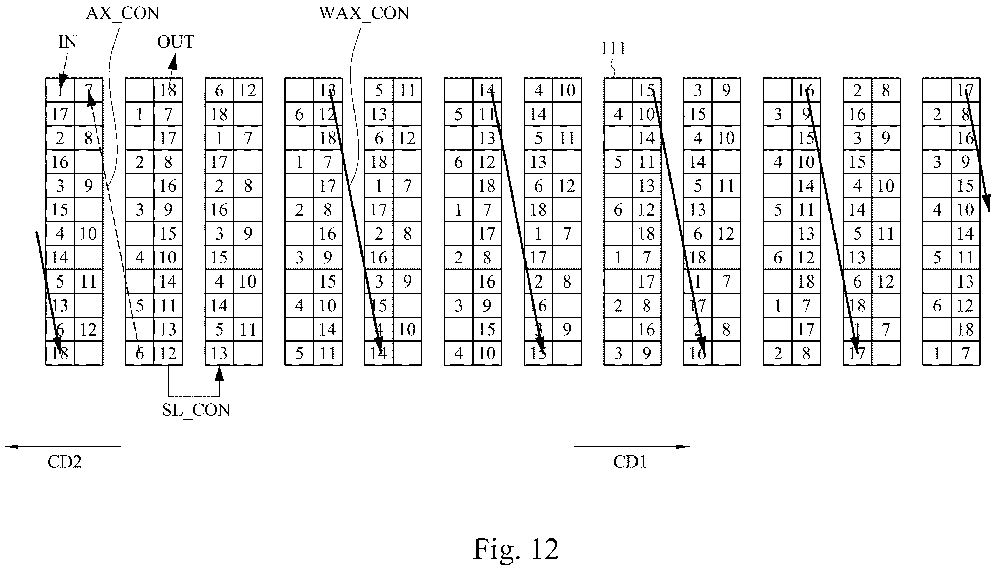

Referring to Fig. 12, which follows Fig. 9 and illustrates a different geometric configuration of the conductors (13-18) in the slots (magnetic field action areas) from Fig. 11, the winding's axial connection segments WAX_CON of the secondary winding's conductors (13-18) are omitted for clarity. In this embodiment, each phase of the multi-phase winding includes two circumferentially-adjacent magnetic field action areas 111. If the same phase winding is designed to fill more than one magnetic field action area, the adjacent magnetic field action area 111 need to be filled, but the adjacent magnetic field action area does not need to be fully filled. For example, each secondary winding's conductor (13-18) can fill two adjacent magnetic field action areas 111 of the same phase. In detail, this embodiment is modified based on the configuration shown in Fig. 8. The secondary winding's conductors (1-6) and the secondary winding's conductors (7-12) are located in two adjacent magnetic field action areas 111, but the secondary winding's conductors (13-18) are arranged at intervals. Referring to Fig. 12 , the secondary winding's conductors (13-18) first fill the left level-positions of the two leftmost groups of magnetic field action areas 111 with the secondary winding's conductors (1-6), then fill the right level-positions of the two magnetic field action areas 111 in the second group with the secondary winding's conductors (7-12), then fill the left level-positions of the two magnetic field action areas 111 in the third group with the secondary winding's conductors (1-6), and then fill the two magnetic field action areas in the fourth group with the secondary winding's conductors (7-12). The level-positions of magnetic field action areas 111 are arranged in this cyclical manner, with the secondary winding's conductors (13-18) arranged in an ascending manner, while the secondary winding's conductors (1-6) and the secondary winding's conductors (7-12) are arranged in a descending manner.

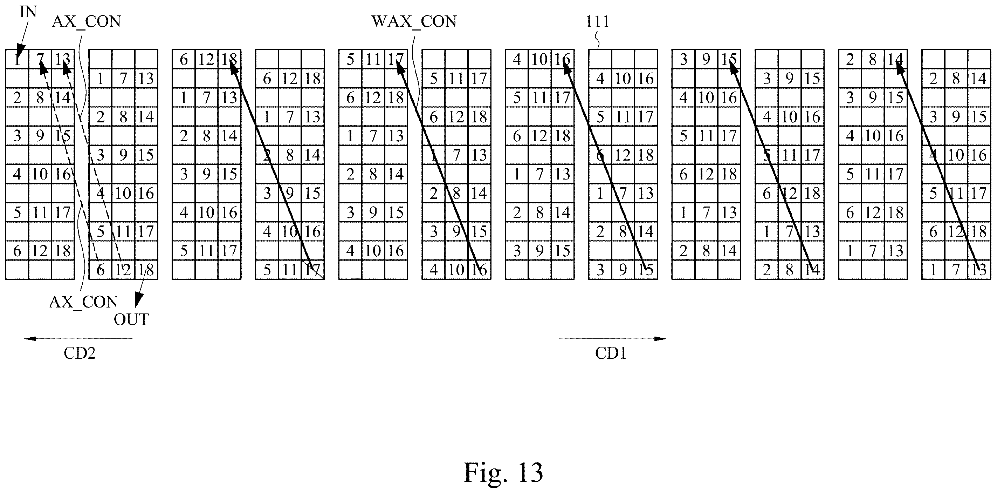

Referring to Fig. 13, which follows Fig. 9 and illustrates a geometric configuration of the secondary winding's conductors (13-18) in the slots (magnetic field action areas) that differs from Fig. 11 and Fig. 12. To clearly illustrate the winding's axial connection segments WAX_CON of the secondary winding's conductors (13-18), the axial connection segments of the other secondary winding's conductors (1-6) and (7-12) are omitted. In this embodiment, each phase of the multi-phase winding includes three circumferentially-adjacent magnetic field action areas 111. If the same phase winding is such designed that each magnetic pole is filled with three circumferentially-adjacent magnetic field action areas 111, a different secondary winding and winding structure can be formed. This embodiment can connect six secondary windings in series with the same geometric configuration. Specifically, the secondary winding's conductors (1-6), secondary winding's conductors (7-12), and secondary winding's conductors (13-18) are all wound in a descending manner, i.e., in the same geometric direction, and each secondary winding is respectively arranged in one of three circumferentially-adjacent magnetic field action areas 111. It should be noted that based on the configuration of this embodiment, it is feasible to expand each magnetic pole corresponding to each phase winding to a structure with four or more circumferentially-adjacent magnetic field action areas 111, e.g., by using a larger stator structure to accommodate more magnetic field action areas 111. The various variations in magnetic field action areas 111 and secondary windings depend on the winding requirements and stator design.

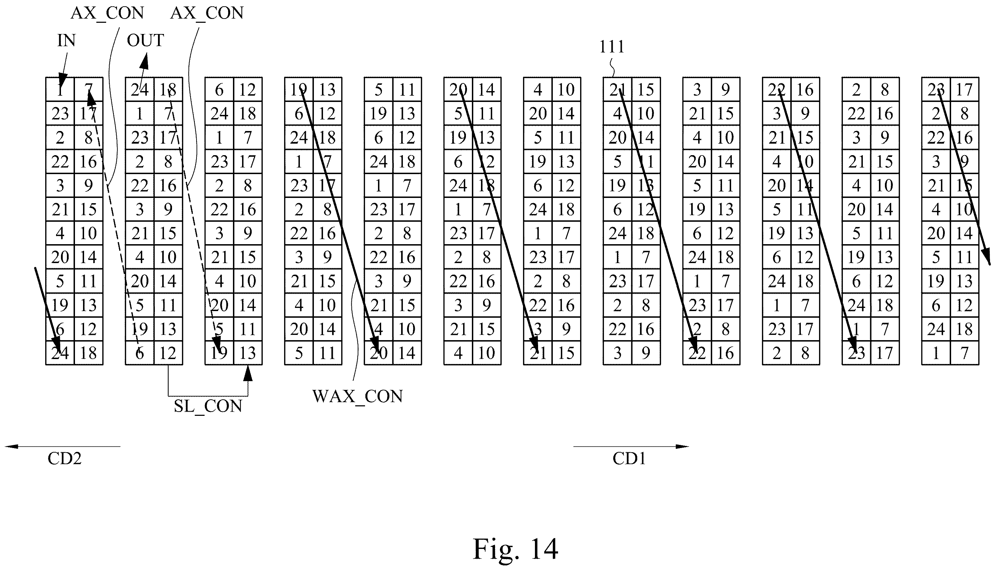

Referring to Fig. 14, illustrating the geometric configuration of the conductors (19-24) of yet another secondary winding in a slot (magnetic field action area) following Fig. 11. To clearly illustrate the winding's axial connection segments WAX_CON of the secondary winding's conductors (19-24), the axial connection segments of the other secondary winding's conductors (1-6), (7-12), and (13-18) are omitted. In this embodiment, each phase of the multi-phase winding includes two circumferentially-adjacent magnetic field action areas 111. If each phase of a multi-phase winding needs to fill two adjacent magnetic field action areas 111, conductors (1-6) and conductors (7-12) can be connected in series via an axial connection segment AX_CON, and conductors (13-18) and conductors (19-24) can be connected in series via another axial connection segment AX_CON. The conductor 12 of the secondary winding's conductors (7-12) and the conductor 13 of the secondary winding's conductors (13-18) can also be connected in series via the same-layer connection segment SL_CON. The secondary winding's conductors (13-18) and secondary winding's conductors (19-24) are wound in an ascending manner and have a different spiral geometric configuration from the secondary winding's conductors (1-6) and secondary winding's conductors (7-12). Therefore, the two sets of current directions (CD1 and CD2) corresponding to these secondary windings are reversed to match the magnetic pole definition. This allows the conductors to fill all level-positions of the two adjacent magnetic field action areas 111. The remaining configurations are similar to configurations described in Figs. 9 to 13 and are not described again.

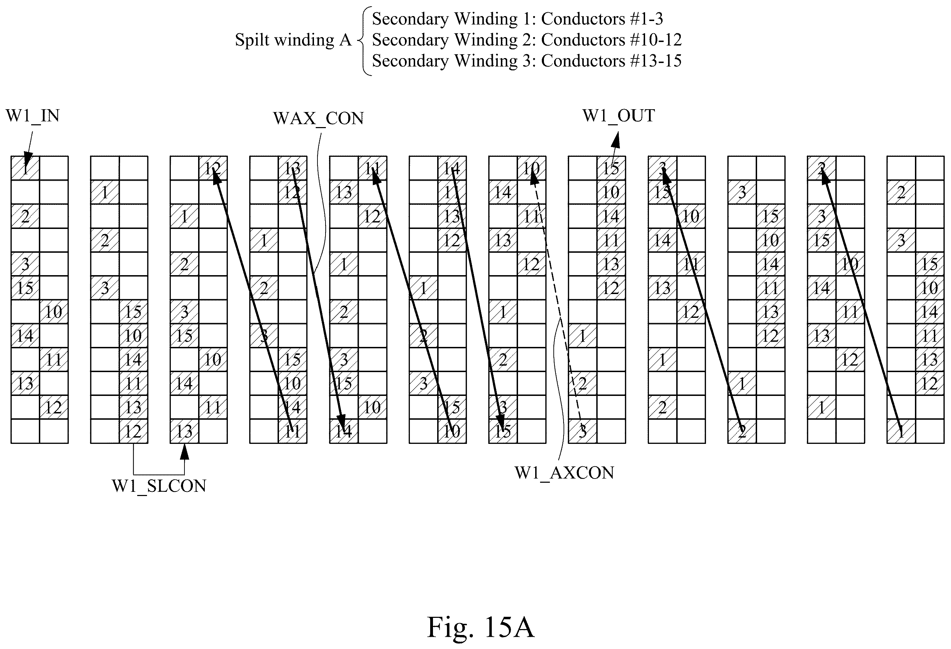

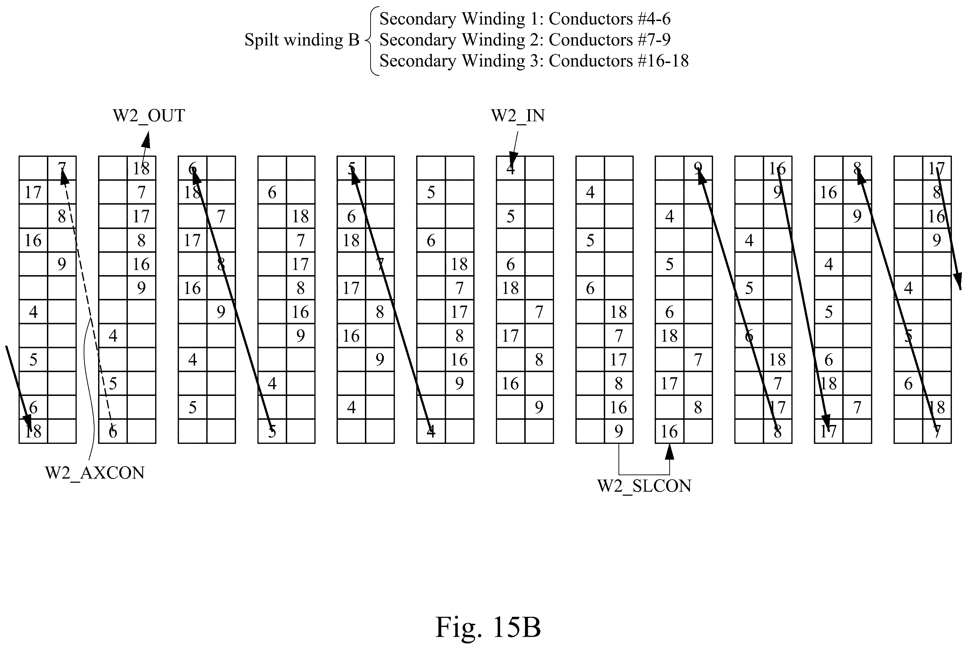

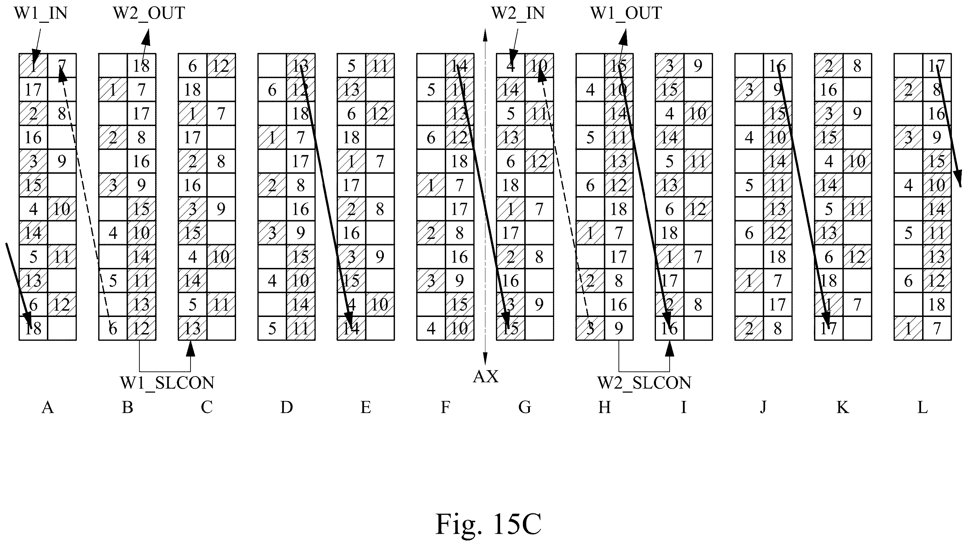

Referring to Figs. 15A, 15B, and 15C, which illustrate the geometric configuration of the conductors in the slots (magnetic field action areas) of two groups of split windings of the three secondary windings shown in Fig. 12, each of which is a single-phase winding split into two balanced single-phase windings. The three secondary windings include a secondary winding 1, a secondary winding 2, and a secondary winding 3. The secondary winding 1 includes conductors 1-6, the secondary winding 2 includes conductors 7-12, and the secondary winding 3 includes conductors 13-18. First, in Fig. 15A, the split winding A includes a first group of conductors 1 to 3 of the secondary winding 1, the conductors 10 to 12 of the secondary winding 2, and the conductors 13 to 15 of the secondary winding 3, and the first group of conductors of the secondary winding 1, secondary winding 2, and secondary winding 3 of the split winding A are connected in series through a same-layer connection segment W1_SLCON and an axial connection segment W1_AXCON. For example, after the conductor 3 of the secondary winding 1 is wound to the lowest level-position, it is connected in series with the conductor 10 of the secondary winding 2 at the highest level-position through the axial connection segment W1_AXCON, and after the conductor 12 of the secondary winding 2 is wound to the level-position, it is connected in series with the conductor 13 of the secondary winding 3 at the lowest level-position through the same-layer connection segment W1_SLCON. Next, in Fig. 15B, the split winding B includes a second group of conductors 4 to 6 of the secondary winding 1, conductors 7 to 9 of the secondary winding 2, and conductors 16 to 18 of the secondary winding 3, and the second group of conductors of the secondary winding 1, secondary winding 2, and secondary winding 3 of the split winding B are connected in series via a same-layer connection segment W2_SLCON and an axial connection segment W2_AXCON. For example, after the conductor 6 of the secondary winding 1 is wound to the lowest level-position, it is connected in series with the conductor 7 of the secondary winding 2 at the highest level-position via the axial connection segment W2_AXCON, and after the conductor 9 of the secondary winding 2 is wound to the lowest level-position, it is connected in series with the conductor 16 of the secondary winding 3 at the lowest level-position via the same-layer connection segment W2_SLCON. Finally, in Fig. 15C, the two split windings (A and B) shown in Fig. 15A and Fig. 15B are combined to form a complete winding. The number and position of the receiving portions in magnetic field action areas A/G, B/H, C/I, D/J, E/K, and F/L for split windings A and B are symmetrical about the rotation axis AX. Such symmetry balances the back electromotive force of the single-phase winding as a whole, and reduces the number of wire or turns required to constitute the entire winding by half.

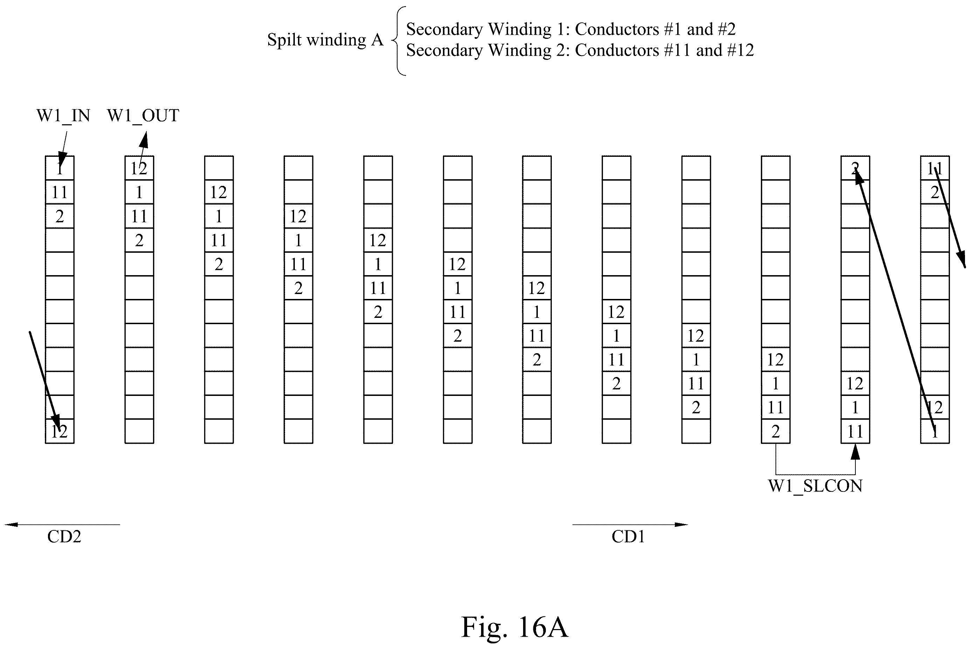

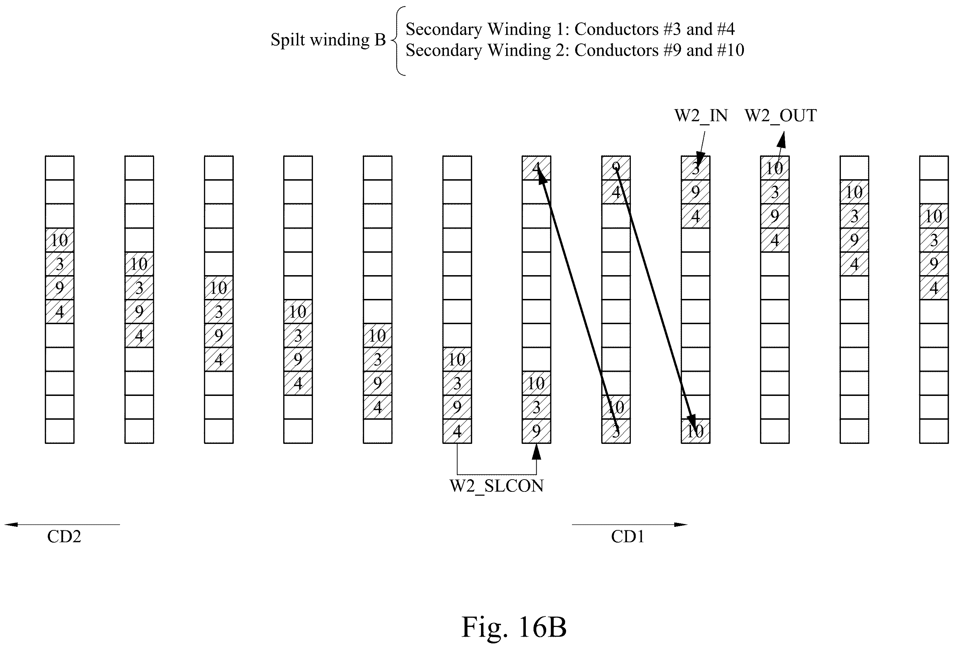

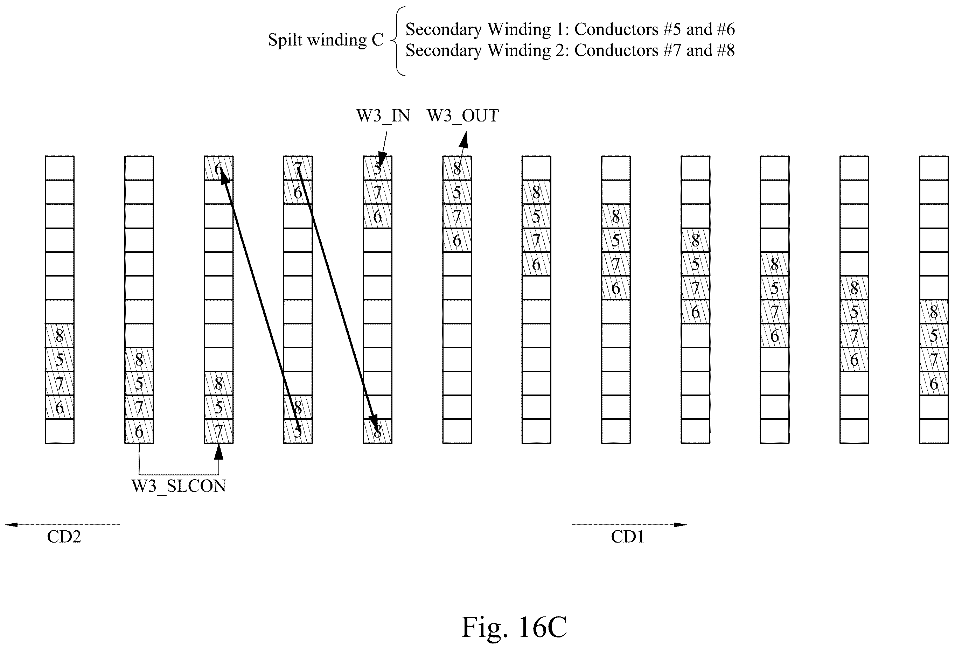

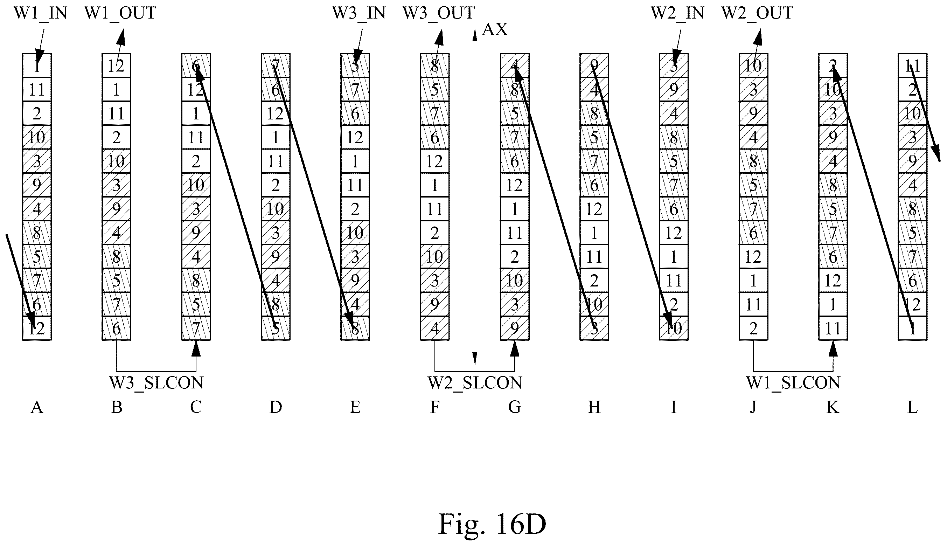

Referring to Figs. 16A, 16B, 16C, and 16D, which illustrate the geometric configuration of the conductors in the slots (magnetic field action areas) of the three groups of split windings for a single phase. The two secondary windings include a secondary winding 1 and a secondary winding 2. The secondary winding 1 includes conductors 1-6, and the secondary winding 2 includes conductors 7-12. It should be noted that in this embodiment, the secondary windings 1 and 2 are wound in descending and ascending configurations, respectively. That is, the secondary windings 1 and 2 have opposite geometric configurations. The secondary winding 1 (conductors 1-6) conducts current along circumferential direction CD1, while secondary winding 2 (conductors 7-12) conducts current along circumferential direction CD2. In Fig. 16A, a split winding A includes a first group of conductors 1-2 of the secondary winding 1 and conductors 11-12 of the secondary winding 2. The first group of conductors of the two secondary windings of the split winding A is connected in series via a same-layer connection segment W1_SLCON, connecting the conductor 2 of the secondary winding 1 and the conductor 11 of the secondary winding 2 in series. In Fig. 16B, a split winding B includes a second group of conductors 3-4 of the secondary winding 1 and conductors 9-10 of the secondary winding 2, and the second group of conductors of the two secondary windings of the split winding B are connected in series via the same-layer connection segment W2_SLCON, connecting the conductor 4 of the secondary winding 1 and the conductor 9 of the secondary winding 2 in series. In Fig. 16C, a split winding C includes a third group of conductors 5-6 of the secondary winding 1 and conductors 7-8 of the secondary winding 2, and the third group of conductors of the two secondary windings of the split winding C are connected in series via the same-layer connection segment W3_SLCON, connecting the conductor 6 of the secondary winding 1 and the conductor 7 of the secondary winding 2 in series. In Fig. 16D, the three split windings of Figs. 16A, 16B, and 16C are combined so that the number and positions of the receiving portions of the split windings A, B, and C in the magnetic field action areas A/E/I, B/F/J, C/G/K, and D/H/L are symmetrical about the rotation axis AX, thereby balancing the back electromotive force of the single-phase winding as a whole and reducing the number of conductors or turns required to constitute the entire winding to 1/3. Although the above examples illustrate splitting a single phase into two groups (Fig. 15) or three groups (Fig. 16) of split windings, based on the aforementioned grouping configuration, splitting a single phase into four or more groups of split windings can be implemented in a similar manner. That is, a single phase can be split into N groups of split windings, depending on winding requirements or stator design, so that the number of conductors or winding turns required to constitute the entire winding can be reduced to 1/N, wherein N is a positive integer greater than 1. This means that the phases can be split into 2, 3, 4, 5, ..., N groups of split windings.

The axial flux motor stator structure of the present disclosure can be expanded to applications with N groups of split windings, depending on the number of phases, magnetic poles, slots (magnetic field action areas), and level-positions, wherein N is a positive integer greater than 1. By using the aforementioned method, the number and position of the receiving portions of the split windings A, B, C-N can be made symmetrical about the rotation axis AX, thereby balancing the back electromotive force of the entire winding. Furthermore, the number of conductor or winding turns required to constitute the entire winding can be reduced to 1/N.

The axial flux motor stator structure disclosed herein has each conductor fabricated into a spirally arranged structure that ascends or descends along the circumferential direction. This conductor structure allows the vertical relative positions of the different conductor wires to remain unchanged during winding, preventing vertical staggering. This allows each conductor wire to be assembled into a complete winding using a simple manner after forming, and the conductor configuration effectively fills the slot space, increasing the slot fill rate. Furthermore, splitting a single-phase winding into N equal parts and balance the back electromotive force of the split windings, the number of conductors in each winding can be reduced to 1/N. The windings with reduced conductor counts are then reconnected in series to form a single-phase winding that has been split into n groups and is balanced, with the number of conductors or winding turns reduced to 1/N of the original number.

## Claims

1. An axial flux motor stator structure(100) comprising:
a plurality of magnetic poles and a plurality of magnetic field action areas(111), each magnetic field action area(111) comprising a plurality of level-positions(L1, L2, L3-Ln) arranged axially along a rotation axis(AX); and
a plurality of conductors(120,121) forming a multi-phase winding,
wherein each conductor(120,121), after passing through a lowest level-position(L1) of the level-positions(L1, L2, L3-Ln), ascends to a higher level-position of the level-positions(L1, L2, L3-Ln) each time when each conductor(120,121) is routed to a next one of the magnetic field action areas(111) corresponding to a next one of the magnetic poles, until each conductor(120,121) ascends through a highest level-position(Ln) of the level-positions(L1, L2, L3-Ln), such that all the conductors(120,121) are routed in the same geometric configuration within the magnetic field action areas(111) of the magnetic poles; or
wherein each conductor(120,121), after passing through a highest level-position(Ln) of the level-positions(L1, L2, L3-Ln), descends to a lower level-position of the level-positions(L1, L2, L3-Ln) each time when each conductor(120,121) is routed to a next one of the magnetic field action areas(111) corresponding to a next one of the magnetic poles, until each conductor(120,121) descends through a lowest level-position(L1) of the level-positions(L1, L2, L3-Ln), such that all the conductors(120,121) are routed in the same geometric configuration within the magnetic field action areas(111) of the magnetic poles; and
wherein each phase winding of the multi-phase winding comprises at least one secondary winding, each secondary winding comprises a portion of the conductors(120,121) connected in series.

2. The axial flux motor stator structure(100) of claim 1, wherein two secondary windings routed in the same geometric direction are connected in series via an axial connection segment (AX_CON, W1_AXCON, W2_AXCON); or
two secondary windings routed in opposite geometric directions are connected in series via a same-layer connection segment(SL_CON, W1_SLCON, W2_SLCON, W3_SLCON).

3. The axial flux motor stator structure(100) of claim 2, wherein the two secondary windings routed in a same geometric direction are configured to transmit current along the same circumferential direction (CD1, CD2), or
the two secondary windings routed in opposite geometric directions are configured to transmit current along opposite circumferential directions (CD1, CD2).

4. The axial flux motor stator structure(100) of claim 2, wherein the axial connection segment connected between the two secondary windings routed in the same geometric direction are located between the lowest level-position(L1) of the level-positions(L1, L2, L3-Ln) and the highest level-position(Ln) of the level-positions(L1, L2, L3-Ln).

5. The axial flux motor stator structure(100) of claim 2, wherein the same-layer connection segment connected between the two secondary windings routed in opposite geometric directions are located at the lowest level-position(L1) of the level-positions(L1, L2, L3-Ln) or at the highest level-position(Ln) of the level-positions(L1, L2, L3-Ln).

6. The axial flux motor stator structure(100) of claim 1, wherein each phase winding of the multi-phase winding has a corresponding one of the magnetic field action areas(111) corresponding to each of the magnetic poles, and each magnetic field action area(111) has at least one secondary winding.

7. The axial flux motor stator structure(100) of claim 1, wherein each phase winding of the multi-phase winding has circumferentially-adjacent two of the magnetic field action areas(111) corresponding to each of the magnetic poles, and each magnetic field action area(111) has at least one secondary winding, and the secondary windings are routed in the same geometric direction or in opposite geometric directions.

8. The axial flux motor stator structure(100) of claim 1, wherein each phase winding of the multi-phase winding has at least circumferentially-adjacent three of the magnetic field action areas(111) corresponding to each of the magnetic poles, and each magnetic field action area(111) has at least one secondary winding, and the secondary windings are routed in the same geometric direction or in opposite geometric directions.

9. The axial flux motor stator structure(100) of claim 1, wherein the secondary windings are connected in series to form a single-phase winding, each secondary winding includes N groups of conductors(120, 121), the N groups of conductors(120,121) all include the same number of conductors(120,121), and the geometric configurations of the N groups of conductors(120,121) in the magnetic field action areas(111) corresponding to the magnetic poles are balanced relative to the rotation axis(AX), wherein N is a positive integer greater than 1.

10. The axial flux motor stator structure (100) of claim 1, further comprising a soft magnetic material body(110), which comprises a plurality of slots(110a), and each slot(110a) is configured as a magnetic field action area(111).

11. The axial flux motor stator structure(100) of claim 10, wherein each conductor(120,121) includes a plurality of inner diameter protrusions(121i), a plurality of receiving portions(121r), and a plurality of outer diameter protrusions(121o), the receiving portions(121r) are located in the corresponding slots(110a), the inner diameter protrusions(121i) are located in an internal space(110b) of the soft magnetic material body(110) surrounding the rotation axis(AX), and the outer diameter protrusions(121o) are exposed outside an outer sidewall(110c) of the soft magnetic material body(110).
